# EUROPÄISCHE PATENTSCHRIFT

(11) **EP 2 864 967 B1**
(45) Veröffentlichungstag und Bekanntmachung des Hinweises auf die Patenterteilung: **10.04.2019**
(21) Anmeldenummer: 13730486.1
(22) Anmeldetag: 15.06.2013
(51) Int. Cl.: G07C 9/00, B60R 25/00, H04W 12/06, H04W 12/08, G07B 15/00, B60R 25/01, G08C 17/02, E05B 49/00

(54) **VORRICHTUNG UND VERFAHREN ZUM STEUERN EINER ZUGANGSBERECHTIGUNG UND/ODER FAHRBERECHTIGUNG FÜR EIN FAHRZEUG**
DEVICE AND METHOD FOR CONTROLLING AN ACCESS AUTHORISATION AND/OR DRIVING AUTHORISATION FOR A VEHICLE
DISPOSITIF ET PROCÉDÉ DE COMMANDE D'UNE AUTORISATION D'ACCÈS ET/OU D'UNE AUTORISATION DE CONDUITE POUR UN VÉHICULE

(30) Priorität: 21.06.2012 DE 102012012389
(43) Veröffentlichungstag der Anmeldung: 29.04.2015
(73) Patentinhaber: Daimler AG, 70327 Stuttgart (DE)
(72) Erfinder: NAGEL, Gerhard, 71116 Gärtringen (DE); PENA BROSSA, Santiago, 70563 Stuttgart (DE); RUTHER, Markus, 73734 Esslingen (DE); SCHEERLE, Marc, 72127 Kusterdingen (DE); SCHOEPGES, Holger, 73110 Hattenhofen (DE); SUBILEAU, Sylvain, 72800 Eningen (DE); MÜLLER, Andreas, 71088 Holzgerlingen (DE)
(74) Vertreter: JENSEN & SON
(86) Internationale Anmeldenummer: PCT/EP2013/001777
(87) Internationale Veröffentlichungsnummer: WO 2013/189584

(56) Entgegenhaltungen:
- DE-A1-102005 023 570
- DE-A1-102005 038 471

## Beschreibung

Die Erfindung betrifft eine Vorrichtung zum Steuern einer Zugangsberechtigung und/oder Fahrberechtigung für ein Fahrzeug nach den Merkmalen des Oberbegriffs des Anspruchs 1 und ein Verfahren für die Zuteilung einer Zugangsberechtigung und/oder Fahrberechtigung für ein Fahrzeug.

Aus dem Stand der Technik ist, wie in der DE 100 64 546 C1 beschrieben, ein Schließsystem für Kraftfahrzeuge bekannt. Dabei werden eine Zugangsberechtigung und eine Fahrberechtigung mit einer Steuerung betätigt, welche Kommunikationsmittel aufweist. Diese Kommunikationsmittel erfassen eine stationäre Sende- und Empfangseinheit im Fahrzeug einerseits und eine mobile Sende- und Empfangseinheit in einem drahtlosen Handtelefon. Die Steuerung überprüft bei dieser Kommunikation die übermittelten Daten auf ihre Zugangs- bzw. Fahrberechtigung und setzt im Erfolgsfall die entsprechenden Systeme wirksam bzw. unwirksam. Das Handtelefon beinhaltet für seinen telefonischen Netzbetrieb eine SIM-Karte. Um das Schließsystem schnell und bequem anzuwenden, wird vorgeschlagen, die SIM-Karte zugleich als Träger der Zugangs- und Fahrberechtigungsdaten zu machen. Außerdem wird im Fahrzeug eine Freisprechanlage verwendet, die aus einer im GHz-Bereich arbeitenden bidirektionalen Nah-Kommunikation besteht. Diese telefonische Nah-Kommunikation wird zugleich für die Übermittlung der Zugangs- und/oder Fahrberechtigungsdaten benutzt.

In der DE 10 2011 011 697 A1 werden ein Schließsystem und ein Verfahren zum Steuern einer Zugangsberechtigung oder Fahrberechtigung für ein Fahrzeug beschrieben. Das Schließsystem umfasst eine Empfangseinrichtung zum Empfangen von Berechtigungsdaten, die fest in das Fahrzeug integrierbar ist, eine Bereitstellungseinrichtung zum Bereitstellen der Berechtigungsdaten und eine Steuereinrichtung zum Steuern einer Zugangsberechtigung und/oder einer Fahrberechtigung für das Fahrzeug, die an die Empfangseinrichtung angeschlossen ist.

Die Bereitstellungseinrichtung ist in ein mobiles Kommunikationsgerät oder ein Datenverarbeitungsgerät integriert. Von diesem Gerät können gegebenenfalls Berechtigungsprofile erstellt und an andere mobile Einheiten übertragen werden.

Aus der DE 44 11 451C1 der Anmelderin ist eine Fahrzeugsicherungseinrichtung mit elektronischer Nutzungsberechtigungscodierung bekannt. Die Fahrzeugsicherungseinrichtung beinhaltet ein asymmetrisches Signaturverfahren, wobei nur schlüsselseitig die Abspeicherung geheimer Informationen zwingend erforderlich ist, um Authentifikations- und/oder Synchronisierungsinformationen sehr fälschungssicher von der Schlüssel- zur Fahrzeugseite zu übertragen.

Google Wallet ist ein Bezahlsystem, das eine gesicherte Datenübertragung in Zusammenhang mit Near Field Communication nutzt. Sensible Daten werden in gesicherten Speicherbereichen abgelegt. Es wird eine PIN zur Zugangskontrolle benutzt.

Aus DE 10 2005 023 570 A1 und DE 10 2005 038 471 A1 sind Zugangsberechtigungssysteme oder Fahrberechtigungssysteme bekannt, die mit mobilen Kommunikationsgeräten arbeiten.

In DE 10 2005 023 570 A1 wird ein bekanntes mobiles Kommunikationsgerät für die Funktion als Fahrberechtigungssystem um eine zusätzliche SIM Karte erweitert. Auf der zusätzlichen SIM Karte werden die Berechtigungsdaten, die den Zugang ermöglichen abgelegt. Hierzu müssen Speicherbereiche auf der zusätzlichen SIM Karte beschreibbar und lesbar sein.

DE 10 2005 038 471 A1 lehrt darüber hinaus, dass Zugangsberechtigungen für Fahrzeuge in einer Autovermietung generiert werden und auf ein mobiles Endgerät geladen werden. Der Nutzer authentisiert sich mit dem nutzereigenen Passwort auf dem mobilen Endgerät. Nach der Authentisierung können die Zugangsberechtigungen mittels Nahverkehrskommunikationssystemen ins Fahrzeug übertragen werden. (DE 10 2005 038 471 A1 , Absätze 20 und 22). Dies ermöglicht Autovermietungen ein Service an Ihre Kunden, dass sich die Kunden die Zugangsberechtigungen auf ihre privaten Kommunikationsgeräte herunterladen lassen können, oder dass die Autovermietung dem Kunden ein mobiles Kommunikationsgerät anbietet und damit unabhängiger vom Original Schlüssel des Fahrzeugherstellers wird.

Damit ist bei bereits vorgeschlagenen Fahrberechtigungssystemen auf mobilen Kommunikationsgeräten stets das persönliche Zugangspasswort des Nutzers des mobilen Kommunikationsgerätes für die Frage der Authentifizierung notwendig. Mit diesem persönlichen Zugangspasswort kann jedoch keine Zuordnung von Speicherbereichen an Unternehmen erfolgen.

Die erfindungsgemäße Aufgabe wird darin gesehen, eine Vorrichtung anzugeben, die eine erhöhte Verfügbarkeit von Berechtigungsdaten für Fahrberechtigungssysteme ermöglicht und in ein Zuteilungsverfahren für Fahrberechtigungssysteme aufzuzeigen, das sich wirtschaftlich umsetzten lässt.

Die Aufgabe wird erfindungsgemäß gelöst durch eine Vorrichtung mit den Merkmalen des Anspruchs 1 und ein Verfahren mit den Merkmalen des Anspruchs 7.

Vorteilhafte Ausgestaltungen der Erfindung sind Gegenstand der Unteransprüche.

Eine Vorrichtung zum Steuern einer Zugangsberechtigung und/oder Fahrberechtigung für ein Fahrzeug umfasst zumindest ein mobiles Kommunikationsgerät und eine Steuerungseinheit im Fahrzeug, welche von dem mobilen Kommunikationsgerät gesendete Berechtigungsdaten empfängt und überprüft, wobei das mobile Kommunikationsgerät einen Datenträger zum Speichern der Berechtigungsdaten aufweist.

Erfindungsgemäß kann der Datenträger des mobilen Kommunikationsgeräts sowohl physisch als Hardware-Lösung als auch virtuell als Software-Lösung realisiert werden. Dabei weist der Datenträger eine Mehrzahl geschützter Speicherbereiche auf, zumindest einer davon zum Speichern der Berechtigungsdaten, wobei ein Datenbankserver, mittels welchem die Berechtigungsdaten verschlüsselt auf den Datenträger übertragbar sind, eine Datenspeicherberechtigung für diesen geschützten Speicherbereich aufweist.

Die Vorrichtung sowie ein mittels der Vorrichtung durchführbares Verfahren zum Steuern der Zugangsberechtigung und/oder Fahrberechtigung für das Fahrzeug ermöglichen eine vereinfachte Zuteilung der Zugangsberechtigung und/oder Fahrberechtigung an unterschiedliche Nutzer, da lediglich ein Datenträger in einem mobilen Kommunikationsgerät erforderlich ist, welcher einen geschützten Speicherbereich aufweist, in welchen die Berechtigungsdaten, welche die Zugangsberechtigung und/oder Fahrberechtigung ermöglichen, vom Datenbankserver zu übertragen sind. Dieser Datenbankserver ist zweckmäßigerweise ein Datenbankserver eines Herstellers des jeweiligen Fahrzeugs. Diese einfache Möglichkeit der Zuteilung der Zugangsberechtigung und/oder Fahrberechtigung ist beispielsweise für Mietwagen oder Firmenfahrzeuge oder für das so genannte Carsharing sehr hilfreich und ermöglicht beispielsweise auch eine unkomplizierte temporäre Nutzungserlaubnis für das jeweilige Fahrzeug. Des Weiteren ist mittels der Vorrichtung auch eine unkomplizierte Sperrung der Zugangsberechtigung und/oder Fahrberechtigung beispielsweise bei einem Diebstahl des mobilen Kommunikationsgerätes oder des Fahrzeugs ermöglicht. Die Übertragung der Berechtigungsdaten vom Datenbankserver auf den Datenträger des mobilen Kommunikationsgerätes kann beispielsweise über eine normale Telekommunikationsverbindung erfolgen.

Die Vorrichtung ermöglicht eine hohe Sicherheit, da eine geschlossene Sicherheitskette bei der Datenübertragung vom Datenbankserver zum Datenträger des mobilen Kommunikationsgerätes und von diesem zur Steuerungseinheit des Fahrzeugs ermöglicht ist. Insbesondere bei einer Datenübertragung mittels eines so genannten Nahfeld-Kommunikationsverfahrens (Near Field Communication - NFC) ist keine Verwendung eines Betriebssystems des mobilen Kommunikationsgerätes zur Datenübertragung vom Datenträger des mobilen Kommunikationsgerätes auf die Steuerungseinheit des Fahrzeugs erforderlich. Dies gestattet beispielsweise auch eine Nutzung eines mobilen Kommunikationsgerätes, welches einen leeren Akku aufweist, d. h. Betriebssystem des mobilen Kommunikationsgerätes ist inaktiv, oder welches mit Viren oder Trojanern befallen ist, da das mobile Kommunikationsgerät keinen Zugriff auf den geschützten Speicherbereich des Datenträgers hat. Des Weiteren ist die Datenübertragung auf die Steuerungseinheit des Fahrzeugs mittels des Nahfeld-Kommunikationsverfahrens auch mittels einer drahtlosen Energieübertragung von der Steuerungseinheit des Fahrzeugs an das mobile Kommunikationsgerät durchzuführen, so dass auch eine Energieversorgung mittels einer Energiequelle des mobilen Kommunikationsgerätes, d. h. mittels einer Batterie oder eines Akkumulators, nicht unbedingt erforderlich ist.
Die Vorrichtung ist auf einfache Weise modular erweiterbar, durch eine Mehrzahl von Datenträgern und/oder eine Mehrzahl von Fahrzeugen, wobei auf jedem Datenträger Berechtigungsdaten für ein Fahrzeug oder für mehrere Fahrzeuge speicherbar sind.

Ausführungsbeispiele der Erfindung werden im Folgenden anhand von Zeichnungen näher erläutert.

Dabei zeigen:
- Fig. 1: schematisch eine Vorrichtung zum Steuern einer Zugangsberechtigung und/oder Fahrberechtigung für ein Fahrzeug, und
- Fig. 2: schematisch einen Datenträger.

Einander entsprechende Teile sind in allen Figuren mit den gleichen Bezugszeichen versehen.

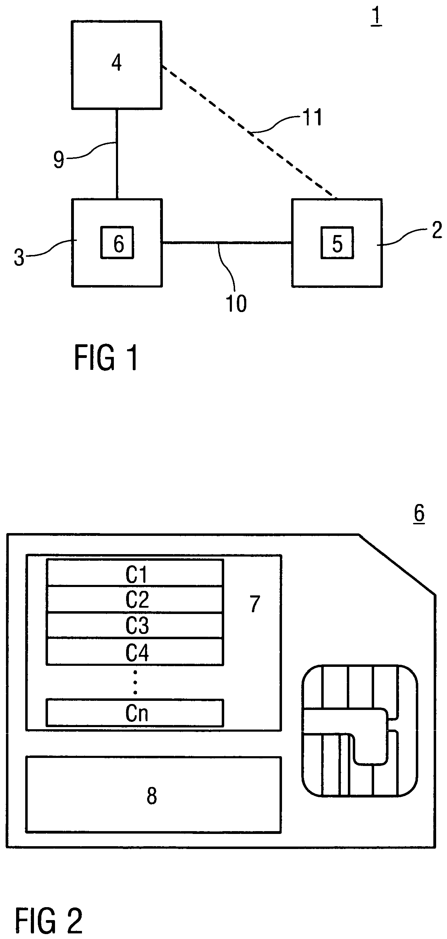

Figur 1 zeigt schematisch eine Vorrichtung 1 zum Steuern einer Zugangsberechtigung und/oder Fahrberechtigung für ein nur schematisch dargestelltes Fahrzeug 2. Mittels dieser Vorrichtung 1 ist ein Verfahren zum Steuern der Zugangsberechtigung und/oder Fahrberechtigung für das Fahrzeug 2 durchführbar. Die Vorrichtung 1 und das Verfahren ermöglichen auf einfache Weise und mit einer hohen Verfügbarkeit eine gegen unbefugte Nutzung abgesicherte Zugangsberechtigung und/oder Fahrberechtigung für ein oder mehrere Fahrzeuge 2 mittels eines mobilen Kommunikationsgerätes 3, beispielsweise mittels eines Mobiltelefons. Dabei stellen die Vorrichtung 1 und das Verfahren eine geschlossene Sicherheitskette bei einem Datentransfer von Berechtigungsdaten für die jeweilige Zugangsberechtigung und/oder Fahrberechtigung von einem Datenbankserver 4 zum mobilen Kommunikationsgerät 3 und nach einer Anfrage einer Steuerungseinheit 5 des Fahrzeugs 2 vom mobilen Kommunikationsgerät 3 zu der Steuerungseinheit 5 des Fahrzeugs 2 sicher.
Die Vorrichtung 1 umfasst im hier dargestellten Beispiel das mobile Kommunikationsgerät 3, welches beispielsweise als ein Mobiltelefon, vorteilhafterweise als ein so genanntes Smartphone ausgebildet ist, oder beispielsweise als ein tragbarer Computer, auch als Handheld bezeichnet. Des Weiteren umfasst die Vorrichtung 1 die Steuerungseinheit 5 im Fahrzeug 2, welche die von dem mobilen Kommunikationsgerät 3 gesendeten Berechtigungsdaten empfängt und überprüft. Bei einem positiven Ergebnis dieser Überprüfung wird von dieser Steuerungseinheit 5 des Fahrzeugs 2 die Zugangsberechtigung und/oder Fahrberechtigung für das Fahrzeug 2 erteilt. Die Steuerungseinheit 5 kann ein oder mehrere Steuergeräte und/oder andere Einheiten, beispielsweise Mikrocontroller, aufweisen.

Das mobile Kommunikationsgerät 3 weist einen Datenträger 6 zum Speichern der Berechtigungsdaten auf, welcher in Figur 2 näher dargestellt ist. Dieser Datenträger 6, welcher vorzugsweise ein auswechselbarer Datenträger 6 des mobilen Kommunikationsgerätes 3 ist, ist beispielsweise, wie in Figur 2 dargestellt, als eine so genannte SIM-Karte des mobilen Kommunikationsgerätes 3 ausgebildet, d. h. als ein so genanntes Subscriber Identity Module oder Teilnehmer-Identitätsmodul des mobilen Kommunikationsgerätes 3.

Die SIM-Karte kann sowohl physisch als Hardware-Lösung als auch virtuell als Software-Lösung realisiert werden. Als Hardware-Lösung existieren verschiedenen miniaturisierten SIM-Kartenchips wie Mini-SIM, Micro-SIM, Nano-SIM, die sich in ihre Größe stark unterscheiden. Nano-SIM ist nochmals 30% kleiner und 15% dünner als die Micro-SIM. Kleinste Hardware-SIM-Karte ist MFF- SIM, die 8% der ursprünglichen Größe entspricht. Darüberhinaus gibt es multifunktionale SIM-Karten, die durch zusätzliche Hardware-(NFC- Chip), bzw. Softwareerweiterungen entstehen. Bei SIM-Karten mit Multi-IMSI (IMSI: International Mobile Subscriber Identity). Kann pro SIM-Karte mehrere IMSI eines Mobilfunkkonzerns für unterschiedliche Länder aufbringen bzw. pro Land mehrere IMSI unterschiedlicher Provider. Alternativ können auch netzneutrale bzw. "homeless" SIM-Karten eingesetzt werden. Wie normaler SIM-Karte funktioniert auch embedded Universal Integrated Circuit Card eUICC. Eine Hardware-SIM kann durch Software-SIM ("SoftSIM", "Virtual SIM") ersetzt werden, indem die auf dem Hardwarechip befindlichen Daten als Software over-the-air (OTA) auf das Mobiltelefon aufgespielt werden.
Der Datenträger 6 kann in weiteren Ausführungsbeispielen jedoch beispielsweise auch als eine Speicherkarte oder als ein so genannter Speicherstick, auch als USB-Stick bezeichnet, ausgebildet sein.

Der Datenträger 6 weist zumindest einen geschützten Speicherbereich C1 bis Cn zum Speichern der Berechtigungsdaten auf, d. h. einen auslesesicheren und/oder schreibsicheren Speicherbereich.

Die in Figur 2 dargestellte Ausführungsform des Datenträgers 6 weist eine Mehrzahl derartiger geschützter Speicherbereiche C1 bis Cn auf, auch als Container bezeichnet. Diese sind in einem so genannten Secure Element des Datenträgers 6 ausgebildet, d. h. in einem gesicherten Speicherelement 7 des Datenträgers 6. In diesen geschützten Speicherbereichen C1 bis Cn sind eine Vielzahl geschützter Daten zu speichern, neben den Berechtigungsdaten für ein Fahrzeug 2 oder für eine Mehrzahl verschiedener Fahrzeuge 2 beispielsweise auch Daten für Finanzdienstleistungen und andere geschützte Anwendungen. Zum Speichern von geschützten Daten in einem dieser geschützten Speicherbereiche C1 bis Cn ist der jeweilige geschützte Speicherbereich C1 bis Cn beispielsweise von einem jeweiligen Unternehmen exklusiv anzumieten oder zu erwerben, d. h. das jeweilige Unternehmen erwirbt eine exklusive Datenspeicherberechtigung für den jeweiligen geschützten Speicherbereich C1 bis Cn.

Die geschützten Speicherbereiche C1 bis Cn sind beispielsweise mittels eines Codes geschützt, d. h. beispielsweise mittels eines alphanumerischen Passwortes, welches dann nur dem Unternehmen bekannt ist, dem der jeweilige geschützte Speicherbereich C1 bis Cn gehört bzw. zugeordnet ist. Auf diese Weise ist ein unbefugter Zugriff auf den jeweiligen geschützten Speicherbereich C1 bis Cn verhindert. Neben diesem gesicherten Speicherelement 7 mit den ein oder mehreren geschützten Speicherbereichen C1 bis Cn kann der Datenträger 6, wie in Figur 2 dargestellt, noch ein weiteres Speicherelement 8 oder auch eine Mehrzahl derartiger weiterer Speicherelemente 8 aufweisen, welche dann nicht derart gesichert sein müssen und auf welchen andere Daten zu speichern sind, die beispielsweise von dem mobilen Kommunikationsgerät 3 zu erstellen und/oder zu nutzen sind.
Zur Speicherung der Berechtigungsdaten für die Zugangsberechtigung und/oder Fahrberechtigung für das Fahrzeug 2 ist zumindest einer dieser geschützten Speicherbereiche C1 bis Cn des gesicherten Speicherelementes 7 des Datenträgers 6 einem Hersteller des Fahrzeugs 2 exklusiv zugeordnet, d. h. der Hersteller des Fahrzeugs 2 hat zumindest einen dieser geschützten Speicherbereiche C1 bis Cn auf dem Datenträger 6 angemietet und dafür die exklusive Speicherberechtigung. Der Code für den jeweiligen geschützten Speicherbereich C1 bis Cn ist dann auch nur dem Hersteller des Fahrzeugs 2 bekannt.

Die Vorrichtung 1 umfasst des Weiteren den Datenbankserver 4, mittels welchem die Berechtigungsdaten für die Zugangsberechtigung und/oder Fahrberechtigung für das Fahrzeug 2 verschlüsselt auf den Datenträger 6, d. h. in den jeweiligen geschützten Speicherbereich C1 bis Cn des Herstellers, übertragbar sind. Dazu weist der Datenbankserver 4 die hierfür erforderliche Datenspeicherberechtigung für den jeweiligen geschützten Speicherbereich C1 bis Cn auf, d. h. der Zugriff vom Datenbankserver 4 auf den geschützten Speicherbereich C1 bis Cn ist durch den Code für den jeweiligen geschützten Speicherbereich C1 bis Cn abgesichert. Bei diesem Datenbankserver 4 handelt es sich daher zweckmäßigerweise um einen Datenbankserver 4 des Herstellers des Fahrzeugs 2.

Im Verfahren ist, um die Zugangsberechtigung und/oder Fahrberechtigung für ein jeweiliges Fahrzeug 2 über das mobile Kommunikationsgerät 3 nutzen zu können, beispielsweise zunächst eine einmalige Registrierung des mobilen Kommunikationsgerätes 3 bei dem Datenbankserver 4 des Herstellers des Fahrzeugs 2 erforderlich. Auf dem Datenbankserver 4 werden vom Hersteller die Berechtigungsdaten beispielsweise für alle Fahrzeuge 2 des Herstellers oder nur für ausgewählte Fahrzeuge 2 zum Abruf zur Verfügung gestellt. Bei dieser Registrierung werden dann die Berechtigungsdaten für das jeweilige Fahrzeug 2 an das mobile Kommunikationsgerät 3 übertragen. Zur Übertragung weiterer oder geänderter Berechtigungsdaten ist dann beispielsweise jeweils wieder eine Anmeldung am Datenbankserver 4 erforderlich.

Die Berechtigungsdaten können beispielsweise mittels eines kryptografischen Verfahrens erzeugt werden, beispielsweise als so genannte Hashwerte. Ein derartiges kryptografisches Verfahren ist beispielsweise in der DE 44 11 451 C1 der Anmelderin beschrieben. Die Datenübertragung vom Datenbankserver 4 auf das mobile Kommunikationsgerät 3 erfolgt zweckmäßigerweise verschlüsselt und End-to-End, d. h. direkt vom Datenbankserver 4 zum mobilen Kommunikationsgerät 3, über ein öffentliches Kommunikationsnetzwerk 9, beispielsweise über ein Telekommunikationsnetzwerk. Das mobile Kommunikationsgerät 3 empfängt die Berechtigungsdaten und speichert sie in dem jeweiligen vom Hersteller des Fahrzeugs 2 angemieteten geschützten Speicherbereich C1 bis Cn des Datenträgers 6 ab.

Nach diesem Registrierungsvorgang erfolgt der Fahrzeugzugang und/oder die Fahrzeugnutzung, d. h. die Zugangsberechtigung und/oder Fahrberechtigung, über das mobile Kommunikationsgerät 3, d. h. über eine Kommunikation zwischen dem mobilen Kommunikationsgerät 3 und dem Fahrzeug 2 bzw. dessen Steuerungseinheit 5. Dazu wird eine Kommunikationsverbindung 10 zwischen dem Fahrzeug 2 und dem mobilen Kommunikationsgerät 3 aufgebaut und die Berechtigungsdaten werden von dem Datenträger 6 an die Steuerungseinheit 5 des Fahrzeugs 2 übertragen.

Dabei werden die Berechtigungsdaten vom mobilen Kommunikationsgerät 3 zur Steuerungseinheit 5 des Fahrzeugs 2 zweckmäßigerweise mittels eines Nahbereichskommunikationsverfahrens übertragen, d. h. mittels eines drahtlosen Kommunikationsverfahrens, insbesondere mittels NFC (Near Field Communication) oder mittels Bluetooth. Hierfür wird das mobile Kommunikationsgerät 3 an eine Nahbereichskommunikationsschnittstelle des Fahrzeugs 2 gehalten oder in kurzer Distanz zu dieser positioniert. Die Nahbereichskommunikationsschnittstelle ist beispielsweise in einem Türgriff oder einer Mittelkonsole des Fahrzeugs 2 angeordnet. Es erfolgt dann ein automatischer Verbindungsaufbau zwischen dem Fahrzeug 2 und dem mobilen Kommunikationsgerät 3. Der Verbindungsaufbau geht vom Fahrzeug 2 aus, d. h. wird durch dieses initialisiert, beispielsweise mittels eines so genannten Challenge-Response-Verfahrens.

Über die Kommunikationsverbindung 10 zwischen dem mobilen Kommunikationsgerät 3 und dem Fahrzeug 2 mittels des Nahbereichskommunikationsverfahrens inklusive eines so genannten Single Wire Protokolls (SWP) wird die Verbindung zum gesicherten Speicherelement 7 des Datenträgers 6 und dem darin befindlichen jeweiligen geschützten Speicherbereich C1 bis Cn des Herstellers geroutet. Dadurch entsteht eine direkte Verbindung zwischen der Steuerungseinheit 5 des Fahrzeugs 2 und dem geschützten Speicherbereich C1 bis Cn des Herstellers auf dem Datenträger 6 des mobilen Kommunikationsgerätes 3. Die Berechtigungsdaten werden dann vom mobilen Kommunikationsgerät 3 an das Fahrzeug 2 übertragen und in der Steuerungseinheit 5 überprüft. Bei einem positiven Ergebnis, d. h. bei einer positiven Authentifizierung, wird die Zugangsberechtigung und/oder Fahrberechtigung für das Fahrzeug 2 erteilt.

Neben der Übertragung der Berechtigungsdaten für die Zugangsberechtigung und/oder Fahrberechtigung für das Fahrzeug 2 können auch weitere Daten vom Datenbankserver 4 auf den jeweiligen geschützten Speicherbereich C1 bis Cn des Datenträgers 6 im mobilen Kommunikationsgerät 3 und von diesem über die Kommunikationsverbindung 10 beispielsweise mittels NFC (Near Field Communication) oder Bluetooth auf die Steuerungseinheit 5 des Fahrzeugs 2 übertragen werden, beispielsweise limitierende Angaben wie zum Beispiel eine Nutzungsdauer und/oder eine Nutzungshäufigkeit des Fahrzeugs 2. Dies ist beispielsweise für ein so genanntes Flottengeschäft sinnvoll, d. h. bei Fahrzeugen 2, welche als Mietwagen, Firmenfahrzeuge oder in einem so genannten Carsharing verwendet werden. Des Weiteren können über die Kommunikationsverbindung 10, d. h. beispielsweise mittels Bluetooth oder auch mittels NFC (Near Field Communication), auch Daten vom Fahrzeug 2 an das mobile Kommunikationsgerät 3 übertragen werden und beispielsweise auch von diesem an den Datenbankserver 4 oder an andere Einrichtungen übertragen werden, beispielsweise ein aktueller Kilometerstand und/oder ein aktueller Tankfüllstand des Fahrzeugs 2. Umgekehrt können über die Kommunikationsverbindung 10 auch Daten vom mobilen Kommunikationsgerät 3 an das Fahrzeug 2 übertragen werden beispielsweise abgespeicherte persönliche Fahrzeugeinstellungen wie Sitz-, Radio-Einstellung und/oder maximale erlaubten Fahrgeschwindigkeit.

Die Vorrichtung 1 und das Verfahren ermöglichen eine hohe Sicherheit und gleichzeitig eine hohe Verfügbarkeit der Berechtigungsdaten für die Zugangsberechtigung und/oder Fahrberechtigung für Fahrzeuge 2, da eine geschlossene Sicherheitskette beim Datentransfer vom Datenbankserver 4 zum mobilen Kommunikationsgerät 3 und von diesem zum Fahrzeug 2 bzw. zur Steuerungseinheit 5 des Fahrzeugs 2, welche die Zugangsberechtigung und/oder Fahrberechtigung überprüft und authentifiziert, vorhanden ist. Insbesondere ist eine Verwendung eines Betriebssystems des mobilen Kommunikationsgeräts 3 nicht erforderlich und es ist keine Einflussnahme des Betriebssystems oder anderer Programme des mobilen Kommunikationsgeräts 3 auf diese Datenübertragung vom Datenbankserver 4 auf den Datenträger 6 des mobilen Kommunikationsgerätes 3 und von diesem auf das Fahrzeug 2 möglich, d. h. es ist beispielsweise auch keine Einflussnahme von Viren oder Trojanern möglich, so dass auch derartige von Viren oder Trojanern befallene mobile Kommunikationsgeräte 3 problemlos genutzt werden können.

Des Weiteren können beispielsweise auch mobile Kommunikationsgeräte 3 genutzt werden, welche einen leeren Akku aufweisen, d. h. das Betriebssystem des mobilen Kommunikationsgeräts ist inaktiv, da das mobile Kommunikationsgerät 3 keinen Zugriff auf den geschützten Speicherbereich C1 bis Cn des Datenträgers 6 hat. Zudem ist die Datenübertragung auf die Steuerungseinheit 5 des Fahrzeugs 2 mittels des Nahfeld-Kommunikationsverfahrens auch mittels einer drahtlosen Energieübertragung von der Steuerungseinheit 5 des Fahrzeugs 2 an das mobile Kommunikationsgerät 3 durchzuführen, so dass auch eine Energieversorgung mittels einer Energiequelle des mobilen Kommunikationsgerätes 3, d. h. mittels einer Batterie oder eines Akkumulators, nicht unbedingt erforderlich ist.

Zudem ist die Zugangsberechtigung und/oder Fahrberechtigung für das Fahrzeug 2 auf einfache Weise zu sperren. Dies ist sinnvoll beispielsweise bei einem Diebstahl des mobilen Kommunikationsgeräts 3 oder des Datenträgers 6 oder bei einem Diebstahl des Fahrzeugs 2 oder bei einer temporären Nutzung des Fahrzeugs 2, wenn es sich beispielsweise um einen Mietwagen, ein Firmenfahrzeug oder um ein Carsharing-Fahrzeug handelt. Die Sperrung kann beispielsweise durch eine Datenübertragung vom Datenbankserver 4 an das mobile Kommunikationsgerät 3 erfolgen, um auf diese Weise die Berechtigungsdaten im jeweiligen geschützten Speicherbereich C1 bis Cn des Herstellers zu löschen oder zu verändern, oder es erfolgt optional eine direkte Datenübertragung vom Datenbankserver 4 oder beispielsweise einer anderen Einrichtung des Herstellers an das jeweilige Fahrzeug 2, genauer gesagt an die Steuerungseinheit 5 des jeweiligen Fahrzeugs 2, über eine entsprechende weitere Kommunikationsverbindung 11, so dass dann bei einer Überprüfung der vorher erteilten und nun nicht mehr gültigen Berechtigungsdaten keine positive Authentifizierung erfolgt und dadurch keine Zugangsberechtigung und/oder Fahrberechtigung für das Fahrzeug 2 erteilt wird.

Die Vorrichtung 1 und das Verfahren ermöglichen auf die geschilderte Weise eine vereinfachte Ausgabe und Rücknahme von Zugangsberechtigungen und/oder Fahrberechtigungen für Fahrzeuge 2. Dies ist sowohl für Privatfahrzeuge als auch insbesondere im Flottengeschäft vorteilhaft, d. h. für Mietwagen, Firmenfahrzeuge und im Carsharing. Des Weiteren ist die Vorrichtung 1 modular erweiterbar, durch weitere Fahrzeuge 2 und/oder weitere Datenträger 6 und/oder weitere mobile Kommunikationsgeräte 3, welche die Berechtigungsdaten für ein oder mehrere Fahrzeuge 2 vom Datenbankserver 4 des jeweiligen Herstellers abrufen.

Für eine sichere Übertragung der Berechtigungsdaten für die Zugangs-/Fahrberechtigung für Fahrzeug 2 muss die Kommunikation zwischen dem mobilen Kommunikationsgerät 3 und dem Datenbankserver 4 verschlüsselt bzw. abgesichert sein. Diese Absicherung bzw. Registrierung des mobilen Kommunikationsgerätes 3 bei dem Datenbankserver 4 des Herstellers des Fahrzeugs 2 kann in zwei Schritten, nämlich die Initialisierung und die Personalisierung der Datenträger 6 bzw. des mobilen Kommunikationsgerätes 3, erfolgen.

Bei der Initialisierung des Datenträgers 6 bzw. des mobilen Kommunikationsgerätes 3 werden zuerst Daten auf den Datenträger 6 in den geschützten Speicherbereich C1 bis Cn abgelegt. Diese Daten kann z.B. ein Zertifikat, eine Initialisierungsdatei oder eine ausführbare Software sein. Die Aufbringung der Daten kann von dem Fahrzeughersteller oder Service Provider durchgeführt werden, wobei die Inhalte der Daten nur dem Fahrzeughersteller bekannt sind. Mittels dieser Initialisierungsdatei/software können Startwerte in Form von kryptographischer Schlüssel generiert und auf die SIM-Karte bzw. in den geschützten Speicherbereich C1 bis Cn abgelegt werden. Diese Startwerte werden dann für die Verschlüsselung der Kommunikation zwischen dem mobilen Kommunikationsgerät 3 und dem Datenbankserver 4 verwendet.

Dabei kann für die verschlüsselte Übertragung z.B. ein asymmetrisches kryptographisches Verfahren wie RSA (Rivest, Shamir und Adleman) oder ein geeignetes symmetrisches Verfahren wie z.B. DES/AES (Data Encryption Standard/Advanced Encryption Standard) verwendet werden. Ein Startwert/Kryptographischer Schlüssel, der von der Initialisierungsdatei/software generiert wird, wird auf die SIM-Karte bzw. in den geschützten Speicherbereich C1 bis Cn abgelegt. Dieser Startwert kann als privater Schlüssel für das RSA-Verfahren verwendet werden und wird mit einem öffentlichen Schlüssel des Datenbankservers verschlüsselt an den Datenbankserver 4 übertragen.
Der öffentliche Schlüssel des Datenbankservers kann ein Teil der Initialisierungsdatei/software sein und auf der SIM-Karte bzw. in den geschützten Speicherbereich C1 bis Cn abgelegt sein. Der Datenbankserver entschlüsselt den Startwert mittels des ihm bekannten öffentlichen Schlüssels und verwendet diesen Startwert zur Identifikation der SIM-Karte bzw. des geschützten Speicherbereichs bzw. zur Kommunikation zwischen dem mobilen Kommunikationsgerät 3 und dem Datenbankserver 4. Eine derartige verschlüsselte Kommunikation zwischen dem mobilen Kommunikationsgerät 3 und dem Datenbankserver 4 ist somit sicher gegen das Mitlesen bzw. Manipulieren durch Dritte. Auch der Service Provider ist nicht mehr in der Lage die Kommunikation mitzulesen.

Bei der Personalisierung des Datenträgers 6 bzw. des mobilen Kommunikationsgerätes 3 werden die Berechtigungsdaten zur Freigabe des Zugangs-/Fahrberechtigungssystems des Fahrzeugs verschlüsselt an den Datenträger 6 bzw. an den geschützten Speicherbereich C1 bis Cn übertragen. Als erstes wird das Vorhandensein des Fahrzeugs 2 von dem Datenbankserver überprüft. Danach wird eine Kommunikation zwischen dem Datenbankserver 4, dem mobilen Kommunikationsgerät 3 und dem Fahrzeug 2 aufgebaut.

Gestartet wird dieser Prozess durch eine Anfrage vom Fahrzeugbesitzer an den Datenbankserver 4, z.B. über eine zugangsgeschützten Internetseite des Fahrzeugs. Typischerweise hat hierbei ein Server, d.h. der Datenbankserver 4 oder ein weiterer Server, bereits die Kenntnis, dass eine Berechtigung eines Fahrzeugbesitzers für den Zugriff auf die zugangsgeschützte Internetseite des Fahrzeugs und daher für das Fahrzeug selbst vorliegt. Der Zugang bzw. die Authentifizierung des Fahrzeugbesitzers ist z.B. durch den Nutzernamen und das Passwort abgesichert. Ebenso kann die Anfrage auch von dem mobilen Kommunikationsgerät 3 aus vom Fahrzeugbesitzer gestartet werden.

Nach der erfolgreichen Überprüfung der Authentifizierung des Fahrzeugbesitzers vom Datenbankserver 4, leitet der Datenbankserver der Anfrage über das mobile Kommunikationsgerät an das Fahrzeug weiter. Erst wenn der Datenbankserver eine Antwort vom Fahrzeug über das mobile Kommunikationsgerät erhält, werden die Berechtigungsdaten zur Freigabe des Zugangs-/Fahrberechtigungssystems des Fahrzeugs verschlüsselt an den Datenträger 6 bzw. an den geschützten Speicherbereich C1 bis Cn übertragen. Die Kommunikation zwischen dem Datenbankserver und dem Fahrzeug läuft über das mobile Kommunikationsgerät kann ebenso wie bei der Initialisierung verschlüsselt werden. Für die Verschlüsselung kann der Startwert/Kryptographischer Schlüssel, der von der Initialisierungsdatei/software bei der Initialisierung generiert wurde, verwendet werden. Die Berechtigungsdaten kann in dem passenden geschützten Speicherbereich, der den richtigen Startwert/Kryptographischer Schlüssel besitzt entschlüsselt und abgelegt werden.

Bei der Personalisierung wird eine bestimmte Anzahl der Berechtigungsdaten von dem Datenbankserver an das mobile Kommunikationsgerät übertragen und auf die SIM-Karte in dem passenden geschützten Speicherbereich mit dem richtigen Startwert/Kryptographischer Schlüsse abgelegt. Die Berechtigungsdaten werden von dem Datenbankserver zentral erzeugt und mit der erfolgreichen Personalisierung auf dem mobilen Kommunikationsgerät übertragen. Die Personalisierung kann nur durch den Datenbankserver und immer wieder erneut durchgeführt werden. In Fall, dass die Anzahl der Berechtigungsdaten eine definierte Schwelle erreicht, kann das mobile Kommunikationsgerät eine erneute Personalisierung an den Datenbankserver anfordern. Der Datenbankserver kann anschließend prüfen, ob das mobile Kommunikationsgerät oder auch weitere mobile Kommunikationsgeräte berechtigt sind, die Berechtigungsdaten auf der SIM-Karte in dem passenden geschützten Speicherbereich abzulegen.

Damit liegt auf dem Datenbankserver immer eine Information über die Anzahl der Benutzer mit Berechtigungsdaten zu dem einzelnen Fahrzeug vor. Dies macht die Fahrzeugnutzung für Mietwagen, für Firmenfahrzeug oder für das Carsharing besonders einfach und sicher. Eine temporäre Zugangs-/Fahrberechtigung kann leicht auf ein mobiles Endgerät übertragen werden. Damit ist eine kurzzeitige Nutzung von Fahrzeugen von mehreren Personen sicher und einfach möglich. Wobei eine sichere Kontrolle über die ausgegebenen "Fahrzeugschlüsseln" behalten wird. Bei einer unberechtigten Nutzung kann nicht nur die Benutzung des Fahrzeugs untersagt werden, sondern auch die Berechtigungsdaten auf einem bestimmten mobilen Kommunikationsgerät ungültig gemacht oder gelöscht werden. Auch bestimmte SIM-Karte bzw. mobiles Kommunikationsgerät für die Zugangs-/Fahrberechtigungssystem kann gesperrt werden. Der Fahrzeughersteller hat durch den Datenbankserver stets den Überblick über die Anzahl der berechtigten Fahrzeugschlüssel bzw. mobile Kommunikationsgeräte.

Wurde die Initialisierung und die Personalisierung für ein mobiles Kommunikationsgerät bzw. für einen geschützten Speicherbereich auf einer SIM-Karte erfolgreich durchgeführt, ist dann eine bestimmte Anzahl der Berechtigungsdaten für die Zugangs-/Fahrberechtigung für Fahrzeug 2 in dem geschützten Speicherbereich auf einer SIM-Karte abgelegt. Mittels eines Nahbereichskommunikationsverfahrens, d.h. mittels eines drahtlosen Kommunikationsverfahrens, z.B. NFC oder Bluetooth, können diese Berechtigungsdaten an das Fahrzeug 1 übertragen werden, um dadurch das Fahrzeug 1 öffnen oder schließen zu können und das Fahrzeug 1 für das Fahren freizugeben.

Dabei besitzt das Zugangs-/Fahrberechtigungssystem eine Nahbereichskommunikationsschnittstelle, z.B. NFC- oder Bluetooth-Schnittstelle. Um eine eindeutige Kommunikation zwischen dem mobilen Kommunikationsgerät und dem Fahrzeug aufbauen zu können, kann eine einmalige Paarung der entsprechenden Schnittstellen erforderlich sein. Diese Paarung kann durch z.B. Übertragung von Schnittstelle-Identifikationsdaten (ID) verschlüsselt erfolgen.

## Patentansprüche

1. Zugangsberechtigungs- oder Fahrberechtigungssystem für ein Fahrzeug (2), umfassend
- ein mobiles Kommunikationsgerät (3) und eine Steuerungseinheit (5) im Fahrzeug,
- Berechtigungsdaten des Fahrzeugherstellers zur Freigabe des Zugangsberechtigungs- oder Fahrberechtigungssystems des Fahrzeugs,
- wobei das mobile Kommunikationsgerät (3) einen Datenträger (6) zum Speichern einer Kommunikationsidentifikation für das mobile Kommunikationsgerät (3) und der Berechtigungsdaten für das Fahrzeug (2) aufweist, und
- die Berechtigungsdaten mittels einer Kommunikationsverbindung (10) über das mobile Kommunikationsgerät (3) an die Steuerungseinheit (5) des Fahrzeugs (2) übermittelbar sind,
- die Kommunikationsverbindung (10) zwischen dem mobilen Kommunikationsgerät und der Steuerungseinheit eine drahtlose Nahbereichskommunikation ist, und
- die Berechtigungsdaten von einem vom Fahrzeughersteller autorisierten Datenbankserver (4) an das mobile Kommunikationsgerät übermittelbar sind, **dadurch gekennzeichnet, dass**
- der Datenträger (6) eine Mehrzahl geschützter Speicherbereiche (C1 bis Cn) aufweist, wobei zumindest einer dieser geschützten Speicherbereiche (C1 bis Cn) zum Speichern der Berechtigungsdaten vorgesehen ist, wobei der Datenbankserver (4), mittels welchem die Berechtigungsdaten verschlüsselt auf den Datenträger (6) übertragbar sind, eine Datenspeicherberechtigung für diesen geschützten Speicherbereich (C1 bis Cn) aufweist.

2. Zugangsberechtigungs- oder Fahrberechtigungssystem (1) nach Anspruch 1,
**dadurch gekennzeichnet, dass**
die Berechtigungsdaten nur nach Authentifizierung des mobilen Kommunikationsgerätes an dem Datenbankserver von dem Datenbankserver (4) an das mobile Kommunikationsgerät übermittelbar sind.

3. Zugangsberechtigungs- oder Fahrberechtigungssystem (1) nach einem der vorhergehenden Ansprüche,
**dadurch gekennzeichnet, dass**
der Speicherbereich (7) als ein virtueller Speicherbereich (6) ausgebildet ist.

4. Zugangsberechtigungs- oder Fahrberechtigungssystem (1) nach einem der vorhergehenden Ansprüche,
**dadurch gekennzeichnet, dass**
die Berechtigungsdaten zur Freigabe des Zugangsberechtigungs- oder Fahrberechtigungssystems mehrerer Fahrzeuge in dem Speicherbereich des Datenträgers ablegbar sind.

5. Zugangsberechtigungs- oder Fahrberechtigungssystem (1) nach einem der vorhergehenden Ansprüche,
**dadurch gekennzeichnet, dass**
Daten vom Fahrzeughersteller in dem Speicherbereich ablegbar ist, wobei die Daten eine Software ist und mittels der Daten die Berechtigungsdaten erzeugt oder vom Datenbankserver (4) abgeholt werden.

6. Zugangsberechtigungs- oder Fahrberechtigungssystem (1) nach einem der vorhergehenden Ansprüche,
**dadurch gekennzeichnet, dass** die drahtlose Nahbereichskommunikation zwischen dem mobilen Kommunikationsgerät und dem Zugangsberechtigungs- oder Fahrberechtigungssystem eine NFC- (Near Field Communication) oder eine Bluetooth-Kommunikation ist.

7. Verfahren zum Zuteilen einer Zugangsberechtigung oder Fahrberechtigung für ein Fahrzeug (2) unter Verwendung einer Vorrichtung (1) nach einem der Ansprüche 1 bis 6, **dadurch gekennzeichnet, dass**
die geschützten Speicherbereiche mittels eines Codes geschützt sind, der nur dem Unternehmen bekannt ist, dem der jeweilige Speicherbereich zugeordnet ist und das Unternehmen eine exklusive Datenspeicherberechtigung für den jeweiligen geschützten Speicherbereich erwirbt.

8. Verfahren nach Anspruch 7, **dadurch gekennzeichnet, dass**
eine einmalige Registrierung des mobilen Kommunikationsgerätes (3) bei dem Datenbankserver (4) des Herstellers des Fahrzeugs erforderlich ist.

9. Verfahren nach einem der Ansprüche 7 oder 8,
**dadurch gekennzeichnet, dass**
weitere Daten vom Datenbankserver (4) auf den geschützten Speicherbereich im mobilen Kommunikationsgerät (3) und von diesem über die Kommunikationsverbindung auf die Steuerungseinheit (5) des Fahrzeugs übertragen werden, enthaltend: limitierende Angaben zur Nutzungsdauer oder Nutzungshäufigkeit oder abgespeicherte persönliche Fahrzeugeinstellungen wie Sitzeinstellungen oder Radioeinstellungen oder eine maximal erlaubte Fahrgeschwindigkeit.

10. Verfahren nach einem der Ansprüche 7 oder 8,
**dadurch gekennzeichnet, dass**
eine Sperrung mittels Datenübertragung vom Datenbankserver 4 an das mobile Kommunikationsgerät (3) erfolgt.

11. Verfahren nach Anspruch 8,
**dadurch gekennzeichnet, dass**
die Registrierung des mobilen Kommunikationsgerätes (3) durch eine Anfrage des Fahrzeugbesitzers an den Datenbankserver (4) über eine zugangsgeschützte Internetseite des Fahrzeugs gestartet wird.

## Claims

1. Access authorisation or driving authorisation system for a vehicle (2), comprising:
- a mobile communication device (3) and a control unit (5) in the vehicle,
- authorisation data of the vehicle manufacturer for enabling the access authorisation or driving authorisation system of the vehicle,
- wherein the mobile communication device (3) comprises a data storage medium (6) for storing a communication identification for the mobile communication device (3) and the authorisation data for the vehicle (2), and
- wherein the authorisation data can be transmitted to the control unit (5) of the vehicle (2) by means of a communication link (10) via the mobile communication device (3),
- wherein the communication link (10) between the mobile communication device and the control unit is a wireless short-distance communication, and
- wherein the authorisation data can be transmitted to the mobile communication device by a data base server (4) authorised by the vehicle manufacturer,
**characterised in that**
- the data storage medium (6) comprises a plurality of protected storage areas (C1 to Cn), wherein at least one of these protected storage areas (C1 to Cn) is provided for storing the authorisation data, wherein the data base server (4), by means of which the authorisation data can be transmitted to the data storage medium (6) in an encrypted form, has a data storage authorisation for this protected storage area (C1 to Cn).

2. Access authorisation or driving authorisation system (1) according to claim 1,
**characterised in that**
the authorisation data can only be transmitted by the data base server (4) to the mobile communication device after authentication of the mobile communication device at the data bank server.

3. Access authorisation or driving authorisation system (1) according to any of the preceding claims,
**characterised in that**
the storage area (7) is designed as a virtual storage area (6).

4. Access authorisation or driving authorisation system (1) according to any of the preceding claims,
**characterised in that**
the authorisation data for enabling the access authorisation or driving authorisation system of several vehicles can be filed in the storage area of the data storage medium.

5. Access authorisation or driving authorisation system (1) according to any of the preceding claims,
**characterised in that**
data can be filed by the vehicle manufacturer in the storage area, wherein the data are software and the authorisation data are generated or collected from the data base server (4) by means of the data.

6. Access authorisation or driving authorisation system (1) according to any of the preceding claims,
**characterised in that**
the wireless short-distance communication between the mobile communication device and the access authorisation or driving authorisation system is an NFC (near field communication) or a Bluetooth communication.

7. Method for allocating an access authorisation or driving authorisation for a vehicle (2) using a device (1) according to any of claims 1 to 6,
**characterised in that**
the protected storage areas are protected by means of a code which is known only to the company to which the respective storage area is assigned, and **in that** the company acquires an exclusive data storage authorisation for the respective protected storage area.

8. Method according to claim 7,
**characterised in that**
a single registration of the mobile communication device (3) at the data base server (4) of the vehicle manufacturer is required.

9. Method according to claim 7 or 8,
**characterised in that**
further data are transmitted by the data base server (4) to the protected storage area in the mobile communication device (3) and from there via the communication link to the control unit (5) of the vehicle, such data containing limiting information on duration or frequency of use or stored personal vehicle settings such as seat settings or radio settings or a maximum permissible travelling speed.

10. Method according to claim 7 or 8,
**characterised in that**
an inhibition is performed by means of data transmission from the data base server (4) to the mobile communication device (3).

11. Method according to claim 8,
**characterised in that**
the registration of the mobile communication device (3) is started by an enquiry of the vehicle owner at the data base server (4) about an access-protected internet page of the vehicle.

## Revendications

1. Système d'autorisation d'accès ou d'autorisation de conduite pour un véhicule automobile (2), comprenant
- un appareil de communication mobile (3) et une unité de commande (5) dans le véhicule automobile
- des données d'autorisation du constructeur automobile destinées au déblocage du système d'autorisation d'accès ou d'autorisation de conduite du véhicule automobile,
- l'appareil de communication mobile (3) présentant un support de données (6) pour mettre en mémoire une identification de communication pour l'appareil de communication mobile (3) et des données d'autorisation pour le véhicule automobile (2), et
- les données d'autorisation étant être transmises au moyen d'une liaison de communication (10) par l'intermédiaire de l'appareil de communication mobile (3) à l'unité de commande (5) du véhicule automobile (2),
- la liaison de communication (10) entre l'appareil de communication mobile et l'unité de commande étant une communication en champ proche sans fil, et
- les données d'autorisation pouvant être transmises par un serveur de base de données (4) autorisé par le constructeur automobile à l'appareil de communication mobile,
**caractérisé en ce que**
- le support de données (6) présentant une pluralité de zones mémoires (C1 à Cn) protégées, au moins l'une de ces zones de mémoire protégées (C1 à Cn) servant à mettre en mémoire les données d'autorisation, le serveur de base de données (4), au moyen duquel les données d'autorisation cryptées peuvent être transmises au support de données (6), présentant une autorisation d'enregistrement de données pour ladite zone de mémoire protégée (C1 à Cn).

2. Système d'autorisation d'accès ou d'autorisation de conduite (1) selon la revendication 1, **caractérisé en ce que**
les données d'autorisation pouvant être transmises uniquement après authentification de l'appareil de communication mobile au serveur de bases de données à partir du serveur de base de données (4) à l'appareil de communication mobile.

3. Système d'autorisation d'accès ou d'autorisation de conduite (1) selon l'une quelconque des revendications précédentes,
**caractérisé en ce que**
la zone de mémoire (7) étant conçue comme une zone de mémoire virtuelle (6).

4. Système d'autorisation d'accès ou d'autorisation de conduite (1) selon l'une quelconque des revendications précédentes,
**caractérisé en ce que**
les données d'autorisation destinées à débloquer le système d'autorisation d'accès et d'autorisation de conduite de plusieurs véhicules peuvent être déposées dans la zone de mémoire du support de données.

5. Système d'autorisation d'accès ou d'autorisation de conduite (1) selon l'une quelconque des revendications précédentes,
**caractérisé en ce que**
les données peuvent être déposées par le constructeur automobile dans la zone de mémoire, les données étant un logiciel et les données d'autorisation pouvant être produites à partir des données ou récupérées par le serveur de base de données (4).

6. Système d'autorisation d'accès ou d'autorisation de conduite (1) selon l'une quelconque des revendications précédentes,
**caractérisé en ce que** la communication en champ proche sans fil entre l'appareil de communication mobile et le système d'autorisation d'accès ou d'autorisation de conduite étant une communication Bluetooth ou une communication en champ proche (Near Field Communication).

7. Procédé d'attribution d'une autorisation d'accès ou une autorisation de conduite pour un véhicule (2) à l'aide d'un dispositif (1) selon l'une quelconque des revendications 1 à 6, **caractérisé en ce que**
les zones de mémoire protégées sont protégées par un code qui est connu uniquement par l'entreprise qui est associé à la zone mémoire concernée et l'entreprise acquiert une autorisation exclusive de mémoire de données pour chaque zone de mémoire protégée.

8. Procédé selon la revendication 7, **caractérisé en ce qu'**un enregistrement unique de l'appareil de communication mobile (3) est nécessaire sur le serveur de base de données (4) du constructeur automobile.

9. Procédé selon l'une des revendications 7 ou 8,
**caractérisé en ce que**
d'autres données peuvent être transmises depuis le serveur de base de données (4) dans la zone de mémoire protégée dans l'appareil de communication mobile (3) et depuis ce dernier par l'intermédiaire de la liaison de communication sur l'unité de commande (5) du véhicule automobile, contenant : des indications de limitation de la durée d'utilisation ou de la fréquence d'utilisation ou des paramétrages personnels mémorisés du véhicule comme des réglages de siège ou d'autoradio ou d'une vitesse de conduite maximale autorisée.

10. Procédé selon l'une des revendications 7 ou 8,
**caractérisé en ce qu'**
un blocage s'effectue au moyen d'un transfert de données depuis le serveur de base de données (4) vers l'appareil de communication mobile (3).

11. Procédé selon la revendication 8,
**caractérisé en ce que**
l'enregistrement de l'appareil de communication mobile (3) est démarré par une demande du propriétaire du véhicule automobile au serveur de base de données (4) par l'intermédiaire d'une page Web à accès protégé du véhicule automobile.
